# EUROPEAN PATENT SPECIFICATION

(11) **EP 2 318 809 B1**
(45) Date of publication and mention of the grant of the patent: **15.08.2012**
(21) Application number: 09785727.0
(22) Date of filing: 07.10.2009
(51) Int. Cl.: G01D 4/00

(54) **REMOTE METERING DEVICE**
GERÄT ZUR FERNMESSUNG
DISPOSITIF DE MESURE À DISTANCE

(30) Priority: 09.10.2008 GB 0818449
(43) Date of publication of application: 11.05.2011
(73) Proprietor: UK Meter Assets Limited, Glasgow G2 5LA (GB)
(72) Inventor: FOY, Alan, Henry, Glasgow G71 8QT (GB)
(74) Representative: Hayden, Nicholas Mark
(86) International application number: PCT/GB2009/051327
(87) International publication number: WO 2010/041062

(56) References cited:
- DE-A1- 19 725 247
- FR-A1- 2 896 069

## Description

The present invention relates to devices for remote reading of utility meters and in particular devices to adapt conventional natural gas metering devices for remote reading and improved gas metering devices.

Devices are known for enabling a conventional gas meter, for example a diaphragm meter, to be read remotely. Examples of such devices can be obtained from Technolog and others, and have changed little in over ten years. Basically such devices attach to a gas meter via a separate low frequency pulse block (which converts the mechanical motion of the meter index into electrical pulses emitted at a rate indicative of the volume of gas used), convert the read pulses into the actual volume of gas used, and send this data, via an SMS text message (or other means), to the relevant party. Consequently, said devices need programming by a trained person at the time of fitting the gas meter, so as to calibrate the device to the meter for correct conversion, as well as setting exactly what information should be sent, when it should be sent, and how often. This also means that such devices have a complex processor to do the pulse to volume conversion, change its schedules and to allow such flexibility in its programming. Furthermore, these devices need an interface to allow the programming, and consequently may have a cable for connection to a computer, or (in a more recent development) comprise wi-fi functionality to allow such programming to be done wirelessly.

Such devices are unnecessarily complex, bulky and expensive, and the need for set-up and calibration at the time of fitting to a gas meter which adds further expense and is inconvenient. It is an aim of the present invention to address one or more of these issues.

In a first aspect of the invention there is provided an integrated device for the adaptation of fluid metering devices, comprising a universal attachment means (120), attachable to a wide range of meters, means (130) for counting and storing the number of pulses generated during a particular time period, the pulses having been generated at a rate dependent on the volume of fluid used, and communication means (130) for communicating the stored pulse readings, characterised in that said communication means comprises a standard mobile operator SIM (Subscriber Identity Module) card (230), and an integral antenna (140); and is arranged to communicate using standard mobile telephone networks; and wherein all the components of said integrated device are integrated into a single housing, attachable to a meter by simply plugging thereto, said device being operable to function immediately upon attachment to the meter, without the need for programming or calibration.

Said fluid metering device may be any type of fluid metering device, for example a gas or water meter.

Said attachment means may be similar to those found on conventional low-frequency pulsing devices.

Said device may be arranged to communicate via SMS (Short Message Service) messaging. Said communications means may further comprise a communications chip.

Said antenna may be inside the housing. Alternatively or in addition there may be provided a facility for attaching an external antenna. There may also be provided a signal strength booster.

Said device may comprise pulse generation means. Said pulse generation means may comprise a low frequency pulse transmitter of the type used to convert the rotational movement of a meter's index into electrical pulses at a rate indicative of fluid consumption. Other types of pulse generation means may be applicable depending on the type of meter.

Said device may be operable only to communicate pulse readings, without having the functionality to convert said pulse readings to the corresponding amount of fluid consumed. Consequently, said devices may be implemented solely in hardware. The elimination of the need for any software, simplifies the design, makes the device more reliable and negates the need for any end user software licence agreements. Certain companies, such as the applicant company, own and maintain on-site gas meters, and therefore possess the relevant data to make such conversion centrally, based on the pulse readings and device identification sent from said device. The device may be operable to communicate with a remote meter database such that specific information, for example, the gas supplier, the unique meter reference number, meter model and meter calibration, can be identified. Consequently the devices can be simplified and made cheaper, while not requiring calibration to the particular meter it is attached to, which is a requirement for conventional remote metering devices, to allow said conversion to take place on-board, prior to communication.

Said device may be operable to count pulses generated over preset time periods, and communicate after preset intervals, said preset time periods and preset intervals being fixed. The inventors have realised that a device operating in this way is sufficient in all practical purposes, to enable remote metering and billing. Again, such a design allows simplification of the device, and simplifies set-up, as prior art devices need means to enable set-up programming to set these parameters, and trained persons to perform the set-up, when fitting.

Said device may further comprise an integral long-life battery.

Said device may also comprise means for closing the fluid supply, in response to a wireless instruction received via said communication, for example, when a premises is empty, or when an account is overdue. Said means for closing the fluid supply may comprise a remotely operated servo valve.

Said device may comprise a display, for indicating data such as battery life, signal strength, whether the device is in operation etc. In one embodiment, said device may be a simple LED display, indicating signal strength or signal received, and/or indicating whether pulses are received. Said display may be operable only on user activation.

Said device may be provided with an output for direct reading of said pulse readings.

Documents FR 2896069 and DE 19725247 both disclose remote fluid meter reading devices with radio frequency communication means.

### BRIEF DESCRIPTION OF THE DRAWINGS

Embodiments of the invention will now be described, by way of example only, by reference to the accompanying drawings, in which:
Figure 1 shows the basic elements making up a remote metering conversion device according to one embodiment of the invention; and
Figure 2 shows the elements of the collector/communicator block of Figure 1 in greater detail.

### DETAILED DESCRIPTION OF THE EMBODIMENTS

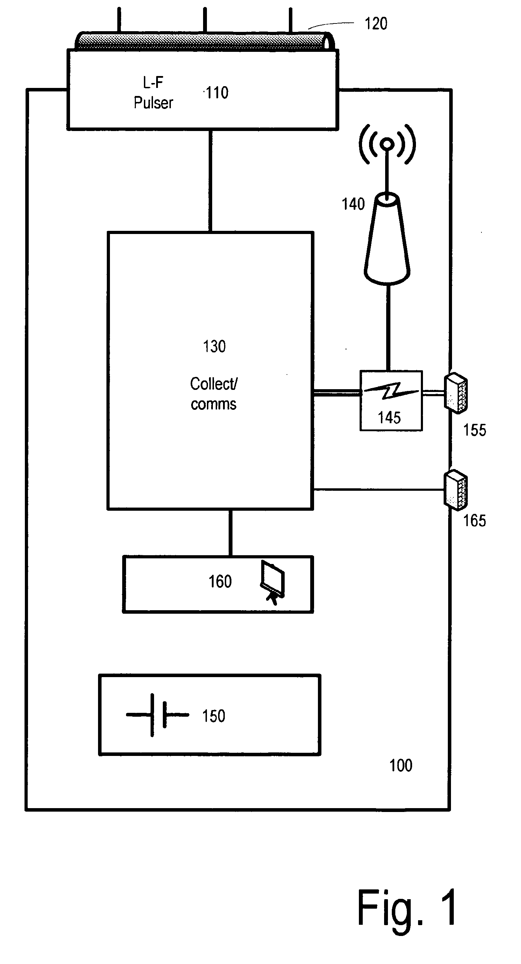

Figure 1 is a block diagram showing the basic elements that make up a remote metering conversion device 100 according to an embodiment of the invention. It comprises a low frequency pulse transmitter 110, the low frequency pulse transmitter having a universal fixing 120 for plugging onto the majority of meter outputs (in some cases a simple adaptor may be required). The low frequency pulse transmitter feeds into the collector/communicator 130 block, which counts and stores the number of pulses consumed over given time intervals (for example, every 30 minutes). The device 100 also comprises an antenna/aerial 140 (in this embodiment via signal booster 145) to send the metering information over conventional a mobile telephone network, and a battery 150, preferably sufficient for powering the device for a number of years without charging.

Optionally, device 100 may also have a parallel output 165 for direct transmission of received pulses to an external device (possibly an RG11 telephone socket) and an LED (or possibly digital) display 160, for indicating the GSM signal strength (or simply indicating that sufficient signal strength is detected for communication), and/or a pulse test option for checking that the meter is producing pulses. Other display options include the monitoring and/or testing of the battery 150, or an indication as to whether the device 100 is operational. In all cases it is preferable that the display is only operational on the push of a button (or similar), so as to conserve battery power.

While the antennal 140 is depicted as an internal antenna, shown inside (or physically attached to) the housing, an external antenna could instead be used (attached by wire) to allow greater mobility so as to get the best signal (or, indeed any signal). In this embodiment, as well as the internal antenna 140, there is provided a socket 155 for connection to an external antenna, for use in situations where the internal antenna cannot obtain sufficient signal strength to communicate.

The low frequency pulse transmitter may be similar to or of the type manufactured by Elster-Handel GmbH, such as those designated IN-Z31/61, INZ-62 or IN-Z63. These attach to the index of the meter and comprise a reed switch which is activated each revolution of the first moving drum of the index by a pulse magnet on the drum, thereby causing a pulse to be generated.

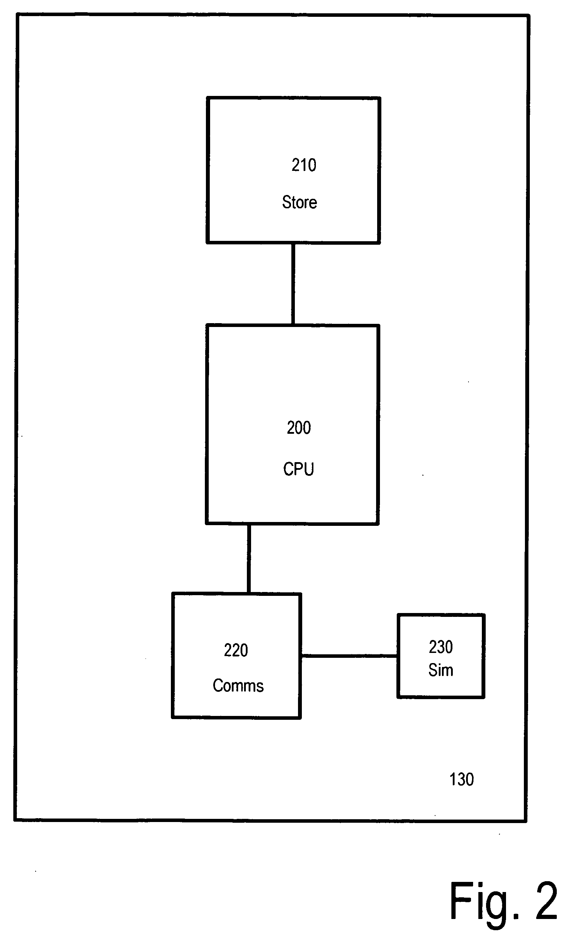

Figure 2 is a block diagram showing the elements of the collector/communicator block 130 of Figure 1 in more detail. It comprises a processor 200, a data store 210, a communications chip 220, and a SIM card 230.

The processor 200 is fed by the low frequency pulse transmitter block 110, acknowledges that pulses are available, and if so, instantly starts to count them, summing them every thirty minutes. Every thirty minute total will then be stored in the data store 210 until sending to the central data bank. The processor also controls the communications chip 220, initiating the transfer of the stored half hourly reads every seven days to the central data bank, along with meter referencing information. Actual communication is done using a standard SIM card 230, in the form of SMS (Short Messaging Service) text messages over a standard mobile telephone network.

The central data bank, on receipt of the messages, will store the pulse readings in unique files for every meter reference point. The central data bank possesses data on all the meter types, and in particular calibration settings sufficient to calculate the actual amount of gas consumed from each set of pulse readings received. A customer can therefore be billed accurately without the need for estimating, or the need for someone to come out and physically read the meter.

Ideally, the device described herein is very compact, with all its elements comprised within a single unit which can simply be plugged onto a customer's gas meter. The device will then immediately start operating without any need for programming or set-up. Installation is so simple, it is envisaged that it can be entrusted to the customer, without the need for an engineer or other technical expert. In particular, there will be no mains power supplies or connection to gas pipework.

Optionally, said device may also be able to receive a remote signal and, should said remote signal instruct it, turn of the gas supply by actuating a servo valve, for example, if a customer is in arrears, or where a property has been emptied. Therefore no engineer needs to be sent out to do this, saving in cost and increasing safety (both in switching off the gas at unoccupied premises, and in protecting engineers from irate customers).

Information in the central data bank could also be used for monitoring usage rates to help determine whether it has been removed without authorisation (zero reading), or if there is a gas leak (very high reading). Essentially, any reading that appears abnormal in comparison to the historical usage could be flagged by the system.

The above embodiments are for illustration only and other embodiments and variations are possible and envisaged without departing from the spirit and scope of the invention. For example, the timescales and counting periods disclosed are purely an example of convenient timescales and counting periods, and the skilled person will realise that different timescales and periods may be chosen. Furthermore, the above description is made with reference to natural gas meters, but is also applicable to other fluid metering devices, such as water meters.

The device described above is designed for attachment to conventional metering devices with a mechanical index output, designed to be read manually. More recently, meters have been designed with a pulsed output, negating the need for the low frequency pulse transmitter. Consequently, a device as described above, without the low frequency pulse transmitter but which functions immediately on connection to the meter, is envisaged, for attachment to pulsed output meters.

## Claims

1. An integrated device for the adaptation of fluid metering devices, comprising a universal attachment means (120), attachable to a wide range of meters, means (130) adapted to count and store the number of pulses generated during a particular time period, the pulses having been generated at a rate dependent on the volume of fluid used, and communication means (130) adapted to communicate the stored pulse readings, **characterised in that** said communication means comprises a standard mobile operator SIM (Subscriber Identity Module) card (230), and an integral antenna (140); and is arranged to communicate using standard mobile telephone networks; and wherein all the components of said integrated device are integrated into a single housing, attachable to a meter by simply plugging thereto, said device being operable to function immediately upon attachment to the meter, without the need for programming or calibration.

2. An integrated device as claimed in claim 1 wherein said wide range of meters comprise specifically customer meters adapted to meter a customer's consumption.

3. An integrated device as claimed in any preceding claim wherein said communication is via SMS (Short Message Service) messaging.

4. An integrated device as claimed in any preceding claim wherein said communications means further comprises a communications chip (220).

5. An integrated device as claimed in any preceding claim wherein there is provided a facility (155) for attaching an external antenna.

6. An integrated device as claimed in any preceding claim further comprising a pulse generating means (110) adapted to generat said electrical pulses at a rate dependent on the volume of fluid used.

7. An integrated device as claimed in claim 6 wherein said pulse generation means comprise a low frequency pulse transmitter of the type used to convert the rotational movement of a meter's index into electrical pulses at a rate indicative of fluid consumption.

8. An integrated device as claimed in any preceding claim operable only to communicate pulse readings, without having the functionality to convert said pulse readings to the corresponding amount of fluid consumed.

9. An integrated device as claimed in any preceding claim being implemented solely in hardware, without the need for any software for it to function.

10. An integrated device as claimed in any preceding claim being operable to communicate with a remote meter database such that specific information, for example, the gas supplier, the unique meter reference number, meter model and/or meter calibration, can be identified.

11. An integrated device as claimed in any preceding claim being operable to count pulses generated over preset time periods, and communicate after preset intervals, said preset time periods and preset intervals being fixed.

12. An integrated device as claimed in any preceding claim comprising an integral long-life battery (150).

13. An integrated device as claimed in any preceding claim also comprising means for closing the fluid supply, in response to a wireless instruction received via said communication means.

14. An integrated device as claimed in any preceding claim further comprising an LED display (160), indicating signal strength or signal received, and/or indicating whether pulses are received.

15. An integrated device as claimed in any preceding claim further comprising an output (165) for direct reading of said pulse readings.

## Patentansprüche

1. Eine integrierte Vorrichtung zur Anpassung von Fluidmessvorrichtungen, die ein universelles Befestigungsmittel (120), das an einer großen Auswahl von Messgeräten befestigt werden kann, ein Mittel (130), das angepasst ist, um die Anzahl der über einen bestimmten Zeitabschnitt erzeugten Impulse zu zählen und zu speichern, wobei die Impulse mit einer Geschwindigkeit erzeugt worden sind, die von dem verwendeten Fluidvolumen abhängig ist, und ein Kommunikationsmittel (130), das angepasst ist, um die gespeicherten Impulsmesswerte zu kommunizieren, beinhaltet, **dadurch gekennzeichnet, dass** das Kommunikationsmittel eine standardmäßige SIM(Subscriber Identity Module)-Karte (230) eines Mobilfunkbetreibers und eine integrale Antenne (140) beinhaltet; und eingerichtet ist, um unter Verwendung von standardmäßigen Mobiltelefonnetzen zu kommunizieren; und wobei alle Komponenten der integrierten Vorrichtung in ein einziges Gehäuse, das durch einfaches Anstecken daran an einem Messgerät befestigt werden kann, integriert sind, wobei die Vorrichtung betriebsfähig ist, um sofort nach der Befestigung an dem Messgerät zu funktionieren, ohne Programmieren oder Kalibrierung zu erfordern.

2. Integrierte Vorrichtung gemäß Anspruch 1, wobei die große Auswahl von Messgeräten namentlich Kundenmessgeräte, die angepasst sind, um den Verbrauch eines Kunden zu messen, beinhaltet.

3. Integrierte Vorrichtung gemäß einem der vorhergehenden Ansprüche, wobei die Kommunikation mittels SMS(Short Message Service)-Benachrichtigung geschieht.

4. Integrierte Vorrichtung gemäß einem der vorhergehenden Ansprüche, wobei das Kommunikationsmittel ferner einen Kommunikationschip (220) beinhaltet.

5. Integrierte Vorrichtung gemäß einem der vorhergehenden Ansprüche, wobei eine Einrichtung (155) zum Befestigen einer externen Antenne bereitgestellt ist.

6. Integrierte Vorrichtung gemäß einem der vorhergehenden Ansprüche, die ferner ein Impulserzeugungsmittel (110) beinhaltet, das angepasst ist, um die elektrischen Impulse bei einer Geschwindigkeit, die von dem verwendeten Fluidvolumen abhängig ist, zu erzeugen.

7. Integrierte Vorrichtung gemäß Anspruch 6, wobei das Impulserzeugungsmittel einen Niederfrequenz-Impulstransmitter des Typs beinhaltet, der verwendet wird, um die Drehbewegung des Anzeigers eines Messgeräts mit einer Geschwindigkeit, die Hinweise auf den Fluidverbrauch liefert, in elektrische Impulse umzuwandeln.

8. Integrierte Vorrichtung gemäß einem der vorhergehenden Ansprüche, die nur betriebsfähig ist, um die Impulsmesswerte zu kommunizieren, ohne die Funktionsfähigkeit aufzuweisen, die Impulsmesswerte in die entsprechende Menge von verbrauchtem Fluid umzuwandeln.

9. Integrierte Vorrichtung gemäß einem der vorhergehenden Ansprüche, die lediglich in Hardware implementiert ist, ohne Software für ihr Funktionieren zu erfordern.

10. Integrierte Vorrichtung gemäß einem der vorhergehenden Ansprüche, die betriebsfähig ist, um mit einer entfernten Messgerätdatenbank zu kommunizieren, so dass spezifische Informationen, zum Beispiel das Gasversorgungsunternehmen, die eindeutige Messgerätbezugsnummer, das Messgerätmodell und/oder die Messgerätkallibrierung, identifiziert werden können.

11. Integrierte Vorrichtung gemäß einem der vorhergehenden Ansprüche, die betriebsfähig ist, um Impulse zu zählen, die über vorher festgelegte Zeitabschnitte erzeugt wurden, und um nach vorher festgelegten Intervallen zu kommunizieren, wobei die vorher festgelegten Zeitabschnitte und die vorher festgelegten Intervalle fest eingestellt sind.

12. Integrierte Vorrichtung gemäß einem der vorhergehenden Ansprüche, die eine integrale Batterie mit langer Lebensdauer (150) beinhaltet.

13. Integrierte Vorrichtung gemäß einem der vorhergehenden Ansprüche, die auch ein Mittel zum Schließen der Fluidzufuhr als Reaktion auf eine drahtlose Anweisung, die über das Kommunikationsmittel empfangen wurde, beinhaltet.

14. Integrierte Vorrichtung gemäß einem der vorhergehenden Ansprüche, die ferner eine LED-Anzeige (160) beinhaltet, die Signalstärke oder Signalempfang zeigt, und/oder zeigt, ob Impulse empfangen werden.

15. Integrierte Vorrichtung gemäß einem der vorhergehenden Ansprüche, die ferner eine Ausgabe (165) zum direkten Ablesen der Impulsmesswerte beinhaltet.

## Revendications

1. Un dispositif intégré destiné à l'adaptation de dispositifs de mesure de fluide, comprenant un moyen d'attache universel (120), pouvant être attaché à une large gamme d'appareils de mesure, un moyen (130) adapté pour compter et stocker le nombre d'impulsions générées au cours d'une période de temps particulière, les impulsions ayant été générées à une vitesse qui dépend du volume de fluide utilisé, et un moyen de communication (130) adapté pour communiquer les lectures d'impulsions stockées, **caractérisé en ce que** ledit moyen de communication comprend une carte SIM (module d'identification de l'abonné) d'opérateur mobile standard (230), et une antenne solidaire (140) ; et est arrangé pour communiquer en utilisant des réseaux de téléphonie mobile standard ; et dans lequel tous les composants dudit dispositif intégré sont intégrés dans un logement unique, pouvant être attaché à un appareil de mesure en le branchant simplement à celui-ci, ledit dispositif étant opérationnel pour fonctionner dès qu'il est attaché à l'appareil de mesure, sans le besoin de programmation ou de calibrage.

2. Un dispositif intégré tel que revendiqué dans la revendication 1 dans lequel ladite large gamme d'appareils de mesure comprend des appareils de mesure spécifiques clients adaptés pour mesurer la consommation d'un client.

3. Un dispositif intégré tel que revendiqué dans n'importe quelle revendication précédente dans lequel ladite communication se fait via messagerie SMS (service de minimessages).

4. Un dispositif intégré tel que revendiqué dans n'importe quelle revendication précédente dans lequel ledit moyen de communications comprend en outre une puce de communications (220).

5. Un dispositif intégré tel que revendiqué dans n'importe quelle revendication précédente dans lequel il est fourni une installation (155) pour attacher une antenne externe.

6. Un dispositif intégré tel que revendiqué dans n'importe quelle revendication précédente comprenant en outre un moyen de génération d'impulsions (110) adapté pour générer lesdites impulsions électriques à une vitesse qui dépend du volume de fluide utilisé.

7. Un dispositif intégré tel que revendiqué dans la revendication 6 dans lequel ledit moyen de génération d'impulsions comprend un émetteur d'impulsions basse fréquence du type utilisé pour convertir le mouvement rotatif d'un pointeur d'appareil de mesure en impulsions électriques à une vitesse indicatrice de la consommation de fluide.

8. Un dispositif intégré tel que revendiqué dans n'importe quelle revendication précédente opérationnel uniquement pour communiquer des lectures d'impulsions, sans avoir la fonctionnalité de convertir lesdites lectures d'impulsions en quantité correspondante de fluide consommé.

9. Un dispositif intégré tel que revendiqué dans n'importe quelle revendication précédente implémenté seulement dans du matériel, sans qu'il ait besoin d'un logiciel quelconque pour fonctionner.

10. Un dispositif intégré tel que revendiqué dans n'importe quelle revendication précédente opérationnel pour communiquer avec une base de données d'appareil de mesure à distance de telle sorte que des informations spécifiques, par exemple, l'approvisionneur en gaz, le numéro de référence d'appareil de mesure unique, le modèle d'appareil de mesure et / ou le calibrage d'appareil de mesure, puissent être identifiées.

11. Un dispositif intégré tel que revendiqué dans n'importe quelle revendication précédente opérationnel pour compter des impulsions générées sur des périodes de temps pré-établies, et pour communiquer après des intervalles pré-établis, lesdites périodes de temps pré-établies et lesdits intervalles pré-établis étant fixés.

12. Un dispositif intégré tel que revendiqué dans n'importe quelle revendication précédente comprenant une batterie longue durée solidaire (150).

13. Un dispositif intégré tel que revendiqué dans n'importe quelle revendication précédente comprenant également un moyen destiné à fermer l'approvisionnement en fluide, en réponse à une instruction sans fil reçue via ledit moyen de communication.

14. Un dispositif intégré tel que revendiqué dans n'importe quelle revendication précédente comprenant en outre un affichage à DEL (160), indiquant la force de signal ou le signal reçu, et / ou indiquant si des impulsions sont reçues.

15. Un dispositif intégré tel que revendiqué dans n'importe quelle revendication précédente comprenant en outre une sortie (165) pour la lecture directe desdites lectures d'impulsions.
